# FASCICULE DE BREVET EUROPEEN

(11) **EP 2 408 718 B1**
(45) Date de publication et mention de la délivrance du brevet: **01.07.2015**
(21) Numéro de dépôt: 10709016.9
(22) Date de dépôt: 17.03.2010
(51) Int. Cl.: C02F 1/52, C02F 1/56, C02F 11/14, C08J 3/05, C02F 1/68

(54) **COMPOSITION À BASE DE CHAUX, LEUR PROCÉDÉ DE FABRICATION ET LEUR UTILISATION EN TRAITEMENT DES EAUX ET BOUES**
ZUSAMMENSETZUNG AUF BASIS VON CALCIUMHYDROXID; HERSTELLUNGSVERFAHREN DAFÜR UND VERWENDUNG DAVON ZUR BEHANDLUNG VON WASSER UND SCHLAMM
COMPOSITION BASED ON CALCIUM HYDROXIDE, METHOD FOR THE PRODUCTION THEREOF AND USE OF SAME FOR TREATING WATER AND MUD

(30) Priorité: 17.03.2009 BE 200900162
(43) Date de publication de la demande: 25.01.2012
(73) Titulaire: S.A. LHOIST RECHERCHE ET DEVELOPPEMENT, 1342 Ottignies-Louvain-La-Neuve (BE); SNF SAS, 42000 Saint-Etienne (FR)
(72) Inventeur: BIOTTEAU, Laurent, F-42320 Saint Christo en Jarez (FR); BLANDIN, Gaétan, F-49360 Maulevrier (FR)
(74) Mandataire: Coulon, Ludivine
(86) Numéro de dépôt international: PCT/EP2010/053478
(87) Numéro de publication internationale: WO 2010/106111

(56) Documents cités:
- WO-A-00/47527
- WO-A2-2006/030102
- US-A- 4 675 114
- US-A- 4 711 727
- US-A- 5 128 046

## Description

La présente invention se rapporte à une composition à base de chaux comprenant au moins de la chaux éteinte en phase solide et au moins un polymère organique.

Au sens de l'invention, par le terme « chaux éteinte », on entend une chaux constituée d'un ensemble de particules solides, principalement de dihydroxyde de calcium Ca(OH)₂ qui est le résultat de la réaction de particules de chaux vive avec de l'eau, réaction appelée hydratation ou extinction. La chaux éteinte s'appelle également chaux hydratée. Par la suite, le dihydroxyde de calcium sera nommé simplement hydroxyde de calcium ou Ca(OH)₂.

De façon générale, la chaux éteinte obtenue peut évidemment contenir les impuretés, principalement issues de la chaux vive. La chaux éteinte peut se présenter sous forme pulvérulente ou sous forme de suspension aqueuse, appelée lait de chaux.

La chaux éteinte est notamment utilisée dans le traitement des eaux ou des boues. Par exemple, le document US 4711727 évoque le traitement des eaux par de la chaux éteinte et par un agent floculant organique contenus dans une suspension.

Les traitements de purification des eaux potables, usées ou industrielles engendrent des résidus appelés boues. Ces boues sont d'abord séparées de l'eau purifiée puis traitées afin de les stabiliser et de les concentrer.

Le traitement des boues, en particuliers urbaines et industrielles, comprend notamment une étape de conditionnement et de séparation solide/liquide, aussi appelée déshydratation, notamment sur filtre à bandes-presseuses, centrifugeuse ou filtre presse chambré et /ou à membranes.

La notion de conditionnement, en particulier de conditionnement chimique, doit être comprise dans la présente invention comme défini par Degrémont dans « Mémento Technique de l'eau, Edition du Cinquantenaire 1989, 9ème édition » au chapitre 19, en particulier au pages 949 à 959.

Par les termes « boues » au sens de l'invention, on entend un résidu présentant un taux de matière sèche d'au moins 0,5%, souvent supérieur ou égal à 1%. Les boues peuvent être minérales ou organiques ou huileuses.

Une incorporation d'un composé calcique, généralement de la chaux, est souvent associée au traitement précité, afin de conditionner mais aussi d'hygiéniser et/ou de stabiliser les boues pour leur stockage à long terme (tenue en tas, etc.) ou encore d'améliorer durablement leurs propriétés d'usage (pelletabilité, épandabilité, etc.) ou en vue d'augmenter leur valeur agronomique. Le composé calcique peut être ajouté à la boue avant (pré-chaulage) et/ou après (post-chaulage) l'étape de déshydratation précitée.

Le conditionnement des boues est donc en réalité un traitement dans lequel les caractéristiques des boues sont modifiées pour faciliter la séparation de la phase solide et de la phase liquide.

Parmi les différents conditionnements connus visant à préparer la boue, on distingue notamment le conditionnement organique et le conditionnement minéral.

Le conditionnement dit organique : utilisation de polymère organique comme seul floculant (dosage-type 2 à 20 kg par tonne de matières sèches). Seuls les polyélectrolytes de synthèse à longues chaînes (masses moléculaires élevées, notamment à base de polyacrylamide) sont efficaces ; ils forment des flocs volumineux.

Le conditionnement dit minéral : utilisation conjointe d'un sel de fer ou d'aluminium, comme le chlorure ferrique (dosage-type : 3 à 10 % en poids par rapport à la matière sèche traitée) et de la chaux (dosage-type: 10 à 40 % en poids par rapport à la matière sèche traitée). Ce mode de conditionnement produit un floc fin mais très robuste aux contraintes. Néanmoins, l'utilisation de sels de fer n'est pas sans poser de problème d'exploitation tels que : corrosion des canalisations et des filtres en acier ou fonte, risque de brûlures pour le personnel...

Il existe également des conditionnements mixtes (minéral et organique) afin d'optimiser les performances de déshydratation.

Une autre possibilité de conditionnement mixte est divulguée dans le document EP 1 154 958 (WO 00/47527). Le procédé divulgué enseigne une addition de chaux comme agent minéral à des boues industrielles, chaux choisie pour éviter que le pH de la boue à laquelle la chaux a été ajoutée ne s'élève trop rapidement.

Dans le document WO2008/058973, un procédé de traitement de boues par de la chaux est décrit dans lequel, puisque les polymères *cationiques* se dégradent en général rapidement à partir d'un pH valant 9 ou 10, un floculant organique *anionique* est ajouté à la boue. Puisque le floculant anionique présente un optimum d'activité aux pH au-delà de 10 à 12, il est donc préférable d'effectuer une montée de pH rapide ce que permet parfaitement l'addition de chaux à la boue.

Comme on le voit, toutes les méthodes de conditionnement ci-dessus présentent des inconvénients. Le conditionnement organique n'est pas le mieux adapté à certains systèmes de déshydratation comme les filtres-presses; les autres conditionnements évoqués font notamment appel aux sels de fer, dont il est préférable de réduire l'usage en raison des problèmes précités, ou encore sont limités, notamment dans le choix de la chaux.

Il est donc utile de pouvoir combiner les avantages des polymères organiques, notamment pour leurs performances à faible dose, et d'un agent minéral, qui apporte notamment structure et résistance, en limitant les inconvénients précités des sels de fer ou analogues. Comme agent minéral, un composé calcique confère en outre les propriétés citées plus haut.

Il existe donc un besoin de disposer d'une composition comprenant notamment un agent minéral à base de chaux éteinte et au moins un polymère organique, capable de conditionner des boues à elle seule, de façon simple, sure et efficace, de préférence en un nombre d'étapes limité. En particulier, il est avantageux que la composition précitée soit un solide, facile à fabriquer et à manipuler, de préférence stable au cours du temps et aisé à incorporer aux boues à traiter. Il convient également que le polymère, minoritaire, soit bien réparti par rapport à l'agent minéral. Avantageusement, il est utile que l'agent minéral précité ne soit ajouté qu'une seule fois lors du traitement des boues, et donc qu'il ait une efficacité également après la déshydratation (post-traitement).

L'invention a donc pour but de pallier les insuffisances de l'état de la technique à ces égards et d'apporter une solution à ces attentes, sans toutefois altérer les propriétés physiques de chacun des deux agents (le minéral et le polymère).

Suivant l'invention, on prévoit une composition dans laquelle ledit polymère organique est incorporé dans ladite phase solide de la chaux éteinte, et caractérisée en ce que ladite composition à base de chaux est une composition solide.

Dès lors, comme on peut le constater, l'invention est relative à une composition à base de chaux dans laquelle un contact intime existe entre le polymère organique et au moins une partie de l'agent minéral, en particulier la chaux éteinte, ce qui confère une bonne répartition du polymère dans l'agent minéral. Par le fait que ledit polymère organique soit incorporé dans la phase solide d'agent minéral, en particulier de chaux éteinte, le polymère organique qui est un composant minoritaire est en réalité bien réparti à la surface et/ou au sein de la phase solide de l'agent minéral contrairement à un simple mélange des composants.

En outre, il a été observé de manière très surprenante que le polymère organique incorporé dans la phase solide conserve ses propriétés physiques notamment pour le conditionnement préalable à la déshydratation des boues.

Dans une forme de réalisation alternative, la composition selon l'invention comprend en outre une quantité d'eau suffisante pour former une suspension aqueuse, qui sera par exemple appropriée lorsque des laits de chaux sont souhaités. Dans les modes de réalisation précités, la composition se présente à priori sous la forme d'un solide, en général pulvérulent.

Dans une forme de réalisation avantageuse, ledit agent minéral comprend en outre de la chaux vive. Comme on peut le constater, dans cette forme de réalisation particulière, l'agent minéral de la composition selon l'invention est essentiellement constitué de chaux vive et de chaux éteinte.

On entend par chaux vive, un composé solide minéral, dont la composition chimique est principalement de l'oxyde de calcium CaO. La chaux vive est communément obtenue par cuisson de calcaire, principalement constitué de CaCO₃, dont il peut subsister quelques pour cents dans la chaux. La chaux vive contient des impuretés, à savoir, des composés tels de l'oxyde de magnésium MgO, de la silice SiO₂ ou encore de l'alumine Al₂O₃, etc., à hauteur de quelques pourcents. Il est entendu que ces impuretés sont exprimées sous les formes précitées mais peuvent en réalité apparaître sous des phases différentes.

La composition selon l'invention se présente essentiellement comme des particules de chaux vive résiduaires, enrobées, éventuellement partiellement, d'une couche de phase solide présentant une composition mixte Ca(OH)₂/polymère organique, dans laquelle le polymère organique est réparti intimement et de façon homogène.

Bien entendu, la présente invention couvre également des compositions comprenant des particules de chaux vive résiduaires enrobées, du moins partiellement, d'une couche de composition mixte susdite ainsi que des particules de chaux vive non enrobées.

Dans une forme de réalisation avantageuse de la composition selon l'invention, la chaux éteinte est présente en une quantité allant de 0,5 à 99,8 % en poids par rapport au poids de la composition, de préférence de 1 à 99 % et de manière plus préférentielle de 10 à 70 % en poids par rapport au poids total de la composition.

En outre, et de manière avantageuse, ledit polymère organique est présent en une quantité allant de 0,2 à 10 % en poids, de préférence de 0,5 à 8 % en poids et de manière plus préférentielle, de 1 à 6,5 % en poids par rapport au poids total de la composition.

De plus, dans une variante selon l'invention, ladite chaux vive est présente en une quantité allant de 0,1% à 99,3%, de préférence de 20 à 80 % en poids par rapport au poids total de la composition.

En particulier, l'agent minéral de la composition selon l'invention est essentiellement constitué de chaux vive et de chaux éteinte. La chaux éteinte est comprise entre 5 g et 1000 g par 1000 g de chaux, le reste de la chaux étant sous la forme de chaux vive. Dans une forme de réalisation de l'invention, la chaux éteinte est comprise entre 10 g et 990 g par 1000 g de chaux, notamment entre 20 g et 900 g, avantageusement entre 50 g et 800 g, en particulier entre 100 g et 700 g par 1000 g de chaux.

Les compositions selon l'invention comprennent avantageusement entre 2 g et 100 g de polymère organique (exprimé en matière active MA) pour 1 kg de chaux (exprimés en équivalent de chaux éteinte Ca(OH)₂), de préférence entre 5 g et 80 g de polymère organique précité pour 1 kg de chaux, de façon particulièrement préférentielle entre 10 g et 65 g de polymère organique précité pour 1 kg de chaux.

Dans une forme particulière de l'invention, ledit polymère organique est un polymère hydrophile de nature non-ionique, anionique, cationique ou amphotère, linéaire, ramifié et/ou réticulé. De par sa nature hydrophile, ledit polymère organique présente une affinité avec l'eau et peut donc être mis en suspension ou en solution dans une phase aqueuse, laquelle pourra être utilisée ultérieurement pour l'extinction, au moins partielle, de la chaux vive en vue de former la composition selon l'invention contenant une quantité prédéterminée de chaux éteinte.

L'invention concerne le secteur technique des polymères hydrophiles organiques. Selon l'invention, les polymères utilisés sont solubles dans l'eau et peuvent être de nature non ionique, anionique, cationique ou amphotère.

En pratique, dans une forme de réalisation, le polymère utilisé peut être obtenu à partir d'un ou plusieurs des monomères choisis parmi:
a) les monomères anioniques possédant une fonction carboxylique (ex : acide acrylique, acide méthacrylique, et leurs sels...) ou possédant une fonction acide sulfonique (ex : acide 2-acrylamido-2-méthylpropane sulfonique (ATBS) et leurs sels...).
b) les monomères non ioniques : acrylamide, méthacrylamide, N-vinyl pyrrolidone, vinylacétate, alcool vinylique, esters acrylate, alcool allylique, le N-vinyl acétamide, la N-vinylformamide,
c) et/ou les monomères cationiques : on citera, en particulier et de façon non limitative, l'acrylate de diméthylaminoéthyle (ADAME) et/ou le méthacrylate de diméthylaminoéthyle (MADAME) quaternisés ou salifiés, le chlorure de diméthyldiallylammonium (DADMAC), le chlorure d'acrylamido propyltriméthyl ammonium (APTAC) et/ou le chlorure de méthacrylamido propyltriméthyl ammonium (MAPTAC),
éventuellement en association avec un ou plusieurs monomère(s) hydrophobe(s) choisi préférentiellement dans le groupe comprenant les esters d'acide (méth)acrylique à chaîne alkyle, arylalkyle et/ou éthoxylée, les dérivés de (méth)acrylamide à chaîne alkyle, arylalkyle ou dialkyle, les dérivés allyliques cationiques, les dérivés de (méth)acryloyle hydrophobes anioniques ou cationiques, ou les monomères anioniques et/ou cationiques dérivés de (méth)acrylamide portant une chaîne hydrophobe.

Ce type de polymère ne nécessite pas le développement de procédé de polymérisation particulier. Il peut être obtenu par toutes les techniques de polymérisation bien connues par l'homme de métier : polymérisation en gel, polymérisation par précipitation, polymérisation en émulsion (aqueuse ou inverse) suivie ou non d'une étape distillation, polymérisation en suspension, polymérisation en solution.

Ledit polymère organique est, dans une forme de réalisation avantageuse, un polymère organique modifié chimiquement, c'est-à-dire un polymère ayant subi une réaction de post-modification.

Par « post modification » on désigne ici des polymères ayant subi une modification de leur structure chimique par réaction d'un ou plusieurs réactifs après polymérisation. On citera par exemple les réactions d'hydrolyse et de neutralisation, de greffage de fonctions ou de chaînes, ou encore les réactions de modification de fonctions chimiques (réaction de Mannich, glyoxalation, greffage d'une fonction hydroxamate, de chaînes latérales hydrophobes ou hydrophiles, dégradation d'Hofmann...), d'ajustements de pH (acidification, basification, tamponnage)...

De plus, de manière connue, le polymère peut également être ramifié ou réticulé. Comme on le sait, un polymère ramifié est un polymère qui présente sur la chaîne principale des branches, des groupements ou des ramifications. Un polymère réticulé est, quant à lui, un polymère dont certaines de ses chaînes sont reliées entre elles par des ponts chimiques covalents formant ainsi un réseau. On pourra effectuer la ramification ou la réticulation de préférence durant (ou éventuellement après) la polymérisation, en présence d'un agent ramifiant/réticulant et éventuellement d'un agent de transfert. On trouvera ci dessous une liste non limitative des ramifiants : méthylène bisacrylamide (MBA), l'éthylène glycol di-acrylate, le polyéthylène glycol diméthacrylate, le diacrylamide, le cyanométhylacrylate, le vinyloxyéthylacrylate ou méthacrylate, la triallylamine, le formaldéhyde, le glyoxal, les composés de type glycidyléther comme l'éthylèneglycol diglycidyléther, ou des époxy ou tout autre moyen bien connu de l'homme de métier permettant la ramification.

Dans une variante, la composition comprend un polymère constitué d'une résine de type polyamine à base d'épichlorhydrine, de type dicyandiamide, de type mélamine formaldéhyde, de type polyalkylèneimine et analogue.

En effet, ledit polymère utilisé peut être obtenu par une réaction de polycondensation. Par « polycondensat » on désigne ici des polymères hydrosolubles obtenus par polycondensation, c'est à dire par un processus de polymérisation par condensations répétées avec élimination de molécules simples ou non (dans ce cas on parlera plutôt de polyadditions). La croissance des chaînes de polymère est engendrée par la consommation de groupements réactifs alors que dans les réactions radicalaires les groupements réactifs sont générés continuellement lors de la croissance des chaînes. Comme polycondensats, on citera, par exemple, les polyamines à base d'épichlorhydrine, les résines dicyandiamide, les résines mélamine formaldéhyde, les polyalkylèneimines,...

Dans une forme particulière de l'invention, ledit polymère organique est un floculant non ionique, anionique, cationique ou amphotère présentant un poids moléculaire moyen pondéral compris entre 5.10⁶ g/mol et 40.10⁶ g/mol.

Dans une variante avantageuse selon l'invention, ledit polymère organique est un coagulant cationique ou amphotère et présentant un poids moléculaire moyen pondéral compris entre 20 000 et 5.10⁶ g/mol. Avantageusement, le poids moléculaire moyen pondéral est supérieur ou égal à 50.000 g/mol, en particulier supérieure ou égal à 200.000 g/mol et de préférence supérieur ou égal à 500.000 g/mol. En outre, le poids moléculaire moyen pondéral est avantageusement inférieur ou égal à 3.10⁶ g/mol.

Dans une forme de réalisation avantageuse, ledit coagulant cationique ou amphotère est à base de sel de diallyldialkyl ammonium.

Les compositions selon l'invention sont avantageusement stables, de façon à être préparées plusieurs jours, voire plusieurs semaines avant leur utilisation.

Les compositions pulvérulentes selon l'invention présentent l'avantage de la facilité d'usage d'une poudre, sans nécessité de recourir à l'intermédiaire de polymères sous la forme solide, parfois difficiles et plus coûteux à obtenir par rapport aux solutions ou émulsions.

D'autres formes de réalisation des compositions suivant l'invention sont indiquées dans les revendications annexées. - La présente invention a également pour objet un procédé de préparation d'une composition à base de chaux selon l'invention comprenant une mise en présence d'un agent minéral et d'une solution, dispersion ou émulsion inverse aqueuse comprenant au moins un polymère organique et de l'eau. Un tel procédé est par exemple connu du document US 4711727 qui divulgue la préparation d'une suspension de chaux éteinte (Hydralime) et de carbonate de calcium (Snowcal) à laquelle sera ensuite mélangé un polymère organique pour traiter les eaux usées. Malheureusement un tel procédé ne permet pas d'obtenir une composition prête à l'emploi, stable, dans laquelle un contact intime existe entre le polymère organique et au moins une partie de l'agent minéral.

L'invention prévoit donc, pour résoudre ce problème, un procédé comprenant une mise en contact intime entre un agent minéral à base de chaux vive et ladite solution, dispersion ou émulsion inverse aqueuse, contenant au moins un polymère organique, de façon à obtenir une réaction exothermique d'extinction au moins partielle de la chaux vive par ladite eau ou partie de ladite eau contenant ledit polymère organique et à former une composition solide à base de chaux dans laquelle ledit au moins un polymère organique est incorporé dans une phase solide de chaux éteinte.

La taille des particules de l'agent minéral à base de chaux vive précité n'est pas critique ; certaines peuvent notamment atteindre plusieurs millimètres. Dans certains modes de réalisation de l'invention, la taille des particules sera majoritairement inférieure à 2 mm, de préférence à 1 mm, avantageusement à 500 µm, tout particulièrement à 200 µm. De plus, 90 % des particules présentes ont une taille de particules supérieure à 0,5 µm, voire à 1 µm.

Dans le procédé selon l'invention, l'eau de la solution, dispersion ou émulsion inverse contenant le polymère va réagir avec la chaux vive et/ou s'évaporer sous l'action exothermique de la réaction, permettant l'obtention d'un solide pulvérulent sec (ne contenant pas ou très peu d'eau libre), facile à manipuler, dans tous les cas où la quantité d'eau introduite n'est pas en excès par rapport à la quantité d'oxyde de calcium présent. Cette composition pulvérulente peut donc être obtenue sans devoir recourir à une quelconque séparation de l'eau et des solides par filtration et/ou séchage ou tout autre moyen de séparation solide/liquide. La composition se présente alors essentiellement sous la forme de chaux vive résiduelle, enrobée, du moins partiellement, de chaux éteinte, dans laquelle le polymère organique est régulièrement et intimement réparti.

Si la quantité d'eau introduite est largement en excès de la quantité de CaO présent, la composition se présente comme une suspension aqueuse de chaux éteinte, dans laquelle le polymère organique est régulièrement et intimement réparti. Dans un cas intermédiaire, la composition se présente comme une chaux éteinte solide pulvérulente, dans laquelle le polymère organique est régulièrement et intimement réparti.

Selon l'invention, l'eau mise en oeuvre peut provenir directement de la forme commerciale du polymère (solution, émulsion ou dispersion aqueuse), elle peut également, en tout ou partie, résulter d'une dissolution, mise en suspension ou mise en dispersion préalable du polymère dans une phase aqueuse.

Comme polymère organique, on utilise ceux cités plus haut, en particulier un coagulant cationique ou amphotère, à base de sels de diallyldialkyl ammonium.

Dans une variante du procédé selon l'invention, le procédé comprend une addition séparée de polymère organique, avant ou après ladite mise en présence d'un agent minéral à base de chaux vive et d'une solution, dispersion ou émulsion inversée aqueuse. En outre, le procédé selon l'invention peut comprendre une addition séparée d'eau avant ou après ladite mise en présence d'un agent minéral à base de chaux vive et d'une solution, dispersion ou émulsion inverse aqueuse.

Comme on peut le constater, le procédé suivant l'invention ne demande pas plus d'infrastructure que le matériel dans lequel une extinction par voie courante est effectuée (hydrateur). Le procédé peut être réalisé en discontinu (par batchs) ou de façon continue. Dans certains modes de réalisation du procédé, la mise en présence de la chaux vive et de la solution ou de l'émulsion aqueuse ne nécessite pas d'infrastructure d'extinction. La mise en présence peut notamment s'effectuer par aspersion de la chaux vive au moyen de la solution ou de l'émulsion aqueuse, par exemple, lors d'une chute de chaux vive ou lors de son transfert sur une bande ou une vis transporteuse ou encore dans un broyeur ou bien un mélangeur.

On constate que le procédé selon l'invention permet un contact intime entre l'agent minéral à base de chaux et le polymère organique, par réaction de la chaux vive et de la solution, dispersion ou émulsion aqueuse contenant le polymère organique pour donner de la chaux éteinte contenant le polymère. De ce fait, ce dernier composant minoritaire, est bien réparti à la surface et/ou au sein de la phase solide de l'agent minéral contrairement à un simple mélange des composants. De plus, malgré des conditions réactionnelles qui lui sont très agressives (réaction fortement exothermique et milieu très caustique), le polymère ainsi mise en oeuvre conserve de façon surprenante ses propriétés physiques.

D'autres formes de réalisation du procédé suivant l'invention sont indiquées dans les revendications annexées.

L'invention concerne également une utilisation d'une composition telle que décrite ci-dessus pour sa mise en oeuvre dans le traitement des eaux et boues, en particulier pour le conditionnement de boues avant leur déshydratation.

L'utilisation d'une composition selon l'invention pour le traitement des boues permet de limiter le nombre d'agents, notamment de conditionnement et permet un traitement en un nombre d'étape d'étapes limité, voire un conditionnement en une seule étape.

Les compositions selon l'invention pour le traitement des boues présentent l'avantage de présenter en surface et donc de façon immédiatement disponible le polymère organique et la chaux sous la forme de Ca(OH)₂, qui interviennent pour le conditionnement des eaux et boues. Dans les formes de réalisation des compositions selon l'invention, dans lesquelles subsiste de la chaux vive, celle-ci reste partiellement disponible pour un effet après la séparation solide/liquide (en post-traitement).

De façon préférentielle, la composition selon l'invention est utilisée comme unique agent de conditionnement des boues, ce conditionnement s'effectuant en particulier en une seule étape. Les modes d'utilisation précités sont simplifiés par rapport aux pratiques courantes qui nécessitent souvent plusieurs agents de conditionnement, introduits de façon séquentielle.

L'utilisation des compositions selon l'invention ne rend plus nécessaire le recours aux sels de fer pour le conditionnement de boues, tout en étant efficace, notamment par l'obtention de flocs résistants, en particulier compatibles avec l'usage de filtres-presses. Le conditionnement de boues est dès lors également rendu plus fiable, performant et aisé à mettre en oeuvre, sans les inconvénients du recours à des sels de fer ou aluminium.

L'utilisation d'une composition selon l'invention pour le traitement des boues permet des économies énergétiques et/ou sur les agents de conditionnement (coagulant, chaux).

D'autres utilisations selon l'invention sont mentionnées dans les revendications annexées.

D'autres caractéristiques, détails et avantages de l'invention ressortiront de la description donnée ci-après, à titre non limitatif et en faisant référence aux exemples et aux figures.

L'invention va maintenant être décrite plus en détail au moyen d'exemples non limitatifs.

### Exemple 1

### Formulation de composition selon l'invention

On utilise une chaux vive industrielle de granulométrie majoritairement inférieure à 90 micromètres et comme polymère organique, un coagulant comprenant des sels de diallyldialkyl ammonium (polyDADMAC-FL4820 sous la forme d'un liquide comprenant 20 % de matière active).

On réalise trois compositions selon l'invention au départ des réactifs précités dans les proportions pondérales présentées au Tableau 1.

**Tableau 1**

| Formulation | Rapport FL4820/chaux |
|---|---|
| 1 | 25/100 |
| 2 | 12,5/100 |
| 3 | 6,25/100 |

Dans un malaxeur asynchrone, on introduit 1000 g de chaux vive. Le coagulant est ensuite ajouté dans les proportions illustrées au Tableau 1, sous agitation, de façon à assurer une bonne répartition et l'agitation est maintenue pendant 30 minutes. La température est mesurée régulièrement et la température maximale est enregistrée.

Les résultats de l'Exemple 1 sont illustrés au Tableau 2.

**Tableau 2**

| Formulations | 1 | 2 | 3 |
|---|---|---|---|
| Masse de chaux (g) | 1000 | 1000 | 1000 |
| Masse de coagulant (g) | 250 | 125 | 62,5 |
| Quantité de matière active (g) (1) | 50 | 25 | 12,5 |
| Quantité d'eau ajoutée (g) (1) | 200 | 100 | 50 |
| Température maximale atteinte pendant le mélange | 160°C | 100-120°C | 60°C |

| | | | |
|---|---|---|---|
| (1) Puisque le poly-DADMAC est ajouté sous la forme d'une solution liquide concentrée à 20 %, 250 g comprennent donc 50 g de matière active et 200 g d'eau (formulation 1). | | | |

Comme on peut le constater, on observe une élévation de température importante pendant la formulation due à la réaction d'hydratation. Plus la quantité de poly-DADMAC ajoutée est importante, plus la température maximale enregistrée est élevée. En ce qui concerne les formulations 1 et 2, une évaporation importante de l'eau est observée. Toute l'eau ne réagit pas avec la chaux, une partie s'évapore en raison de l'augmentation de température observée.

Les trois formulations présentées au Tableau 2 sont des compositions de chaux mixtes comprenant de la chaux vive et de la chaux éteinte ainsi que du coagulant poly-DADMAC incorporé dans la chaux éteinte en phase solide. Les formulations 2 et 3 comprennent majoritairement de la chaux vive tandis que la formulation 1 comprend majoritairement de la chaux éteinte.

Le Tableau 3 montre la composition des différentes formulations.

**Tableau 3**

| Formulations | Composition 1 | Composition 2 | Composition 3 |
|---|---|---|---|
| Pourcentage coagulant (MA) | 5 % | 2,5 % | 1,25 % |
| Pourcentage CaO | 45 % | 66 % | 82 % |
| Pourcentage Ca(OH)₂ (estimation) | 50 % | 31 % | 17% |

### Exemple 2

### Comparaison des performances des compositions selon l'invention par rapport à une composition contenant un floculant cationique

Pour le premier essai, la boue est conditionnée et puis filtrée, suivant un conditionnement analogue à celui utilisé sur le site industriel dont elle provient, afin d'avoir une référence. Le floculant cationique utilisé est le Zetag 8160, disponible auprès de la société CIBA. Pour les trois autres essais, on utilise les compositions selon l'invention, préparées de la même manière que dans l'Exemple 1. Les dosage d'agents de conditionnement s'expriment par rapport à la matière sèche (MS) de la boue.

On soumet donc une boue digérée aux quatre types de conditionnements qui sont présentés au Tableau 4 ci-dessous. Cette boue conditionnée (200 g) est ensuite filtrée via une cellule de filtration/compression Faure, qui simule une filtration industrielle sur filtre-presse. La filtration se déroule pendant 30 minutes, en observant une montée progressive de la pression jusqu'à 5 bars en 2 minutes puis un maintien de cette pression pendant le reste du temps. On mesure ensuite la matière sèche sur les gâteaux formés après 24 heures à l'étuve à 105°C.

**Tableau 4**

| N° d'essai | 1 | 2 | 3 | 4 |
|---|---|---|---|---|
| Conditionnement | Floculant organique | Composition 1 | Composition 2 | Composition 3 |
| Dosage floculant (% en poids) | 1 % | - | - | - |
| Siccité obtenue (% en poids) | 19 % | 33 % | 34 % | 21 % |
| Débâtissage | Collant | OK | OK | Collant |
| Quantité de boue produite (Q) | 5,4 | 3,7 | 3,6 | 6,1 |

Comme on peut le constater, les essais 2 et 3 (compositions 1 et 2) montrent une amélioration de la filtration lors de l'utilisation des formulations de l'Exemple 1. On observe ainsi une amélioration de la siccité du gâteau formé ainsi que son meilleur débâtissage et une diminution des quantités de boues produites. En effet, pour comparer les performances de différents conditionnements, outre la siccité, on cherchera à estimer la quantité de boues produites. On définit donc le rapport suivant:
Q= Quantité de boue déshydratée/quantité de matière sèche initialement présente dans la boue à traiter

Le dernier essai montre un moins bon comportement lié à une dose de coagulant trop faible dans la composition chaux/polymère selon l'invention. Par contre, la combinaison de cette composition 3 avec un floculant organique en faible quantité offre un avantage illustré à l'exemple 5.

### Exemple 3

### Comparaison des performances des compositions selon l'invention par rapport à une composition contenant de la chaux sous forme de lait de chaux et du chlorure de fer

On soumet une boue biologique aux trois compositions suivant l'invention utilisées à l'Exemple 2.

Pour le premier essai, la boue est conditionnée et ensuite filtrée, suivant un conditionnement analogue à celui utilisé sur le site industriel dont elle provient, afin d'avoir une référence. On utilise un conditionnement minéral mettant en jeu 40 % de chaux sous forme de lait de chaux et 10 % de chlorure ferrique, par rapport à la MS de la boue.

Les résultats des conditionnements de boues biologiques obtenus sont présentés au Tableau 5.

**Tableau 5**

| Essai | 1 | 2 | 3 | 4 | 5 |
|---|---|---|---|---|---|
| Dosage CaO | 40 % | | | | |
| Dosage coagulant FeCl₃ | 10 % | | | | 8% |
| Composition | | 1 | 2 | 3 | 3 |
| Dosage formulation | | 40 % | 40 % | 40 % | 30% |
| Siccité | 33 % | 31 % | 22 % | non filtrable | 33% |
| Débâtissage | OK | OK | collant | | OK |
| Quantité de boues produites (Q) | 4,9 | 4,0 | 5,7 | | 4.2 |

Comme on peut le constater, la composition 1 ayant fait l'objet de l'essai 2 permet d'obtenir une bonne déshydratation de la boue biologique. Elle permet d'obtenir un bon débâtissage et une diminution des boues produites, par rapport au conditionnement de référence sur le site industriel. Par ailleurs à l'essai 5, la composition 3, en combinaison avec du chlorure ferrique, en plus faible quantité, permet également une déshydratation satisfaisante et un débatissage aisé.

Les autres formulations ne permettent pas d'obtenir des résultats satisfaisants probablement par manque de coagulant dans la composition.

### Exemple 4

### Stabilité de la composition

Afin de déterminer la stabilité des diverses compositions suivant l'invention, on effectue des tests comparatifs de conditionnement de boues en utilisant des compositions suivant l'invention fraîchement formulées et des formulations stockées préalablement pendant 2 semaines. Après 2 semaines, on n'observe pas de différence visible. Les essais sont effectués sur trois boues différentes, une boue digérée et deux boues biologiques non digérées. Pour chaque boue on utilise la composition selon l'invention qui permet d'obtenir les meilleures performances de conditionnement comme on a pu le constater à la lecture des Exemples 1 à 3.

Les résultats du test de stabilité selon l'invention sont présentés au Tableau 6.

**Tableau 6**

| N° d'essai | 1 | 2 | 3 | 4 | 5 | 6 |
|---|---|---|---|---|---|---|
| Boues | digérée | digérée | biologique 1 | biologique 1 | biologique 2 | biologique 2 |
| Formulation testée | composition 2 | composition 2 | composition 1 | composition 1 | composition 1 | composition 1 |
| Stockage des réactifs | non | 2 semaines | non | 2 semaines | non | 2 semaines |
| Dosage des réactifs (% MS boue) | 20% | 20% | 40% | 40% | 40% | 40% |
| Siccité du gâteau (% MS) | 34% | 36% | 26% | 27% | 28 % | 29% |

Comme on peut le constater, dans tous les cas, on a pu obtenir de bonnes performances de filtration, y compris après 2 semaines de stockage des compositions suivant l'invention.

On observe également une légère amélioration de la siccité des gâteaux pour les compositions ayant été stockées pendant 2 semaines.

### Exemple 5

### Intérêt sur centrifugeuse

On soumet une boue biologique à deux types de conditionnement avant déshydratation sur centrifugeuse. Le premier conditionnement comprend une addition d'un floculant cationique et d'une chaux vive fine (<90 µm), partiellement éteinte telle que divulguée dans le brevet EP 1 154 958, que l'on ajoute sous forme pulvérulente tandis que le second conditionnement comprend une addition du même floculant cationique et de la composition 3 selon l'invention.

Les tests sont réalisés sur un centrifugeuse déshydratant des boues issues d'un traitement biologique et épaissies.

Le floculant utilisé est un floculant fortement cationique ramifié en émulsion. La composition ou la chaux est injectée dans la boue avant injection du floculant. Pour chaque conditionnement la dose optimale de floculant est utilisée.

**Tableau 7**

| | | floculant + chaux vive | floculant + composition 3 |
|---|---|---|---|
| dosage floculant | kg M.A./ton M.S. boue | 1.2 | 0.77 |
| dosage chaux ou composition 3 | % M.S. boue | 29% | 29% |
| siccité boue déshydratée | % MS | 26-27% | 26-27% |

Comme on peut le constater, en association avec un floculant, la composition selon l'invention permet de diminuer la dose de floculant à mettre en oeuvre tout en conservant la siccité finale des boues déshydratées et ce pour un même dosage de chaux.

Il est bien entendu que la présente invention n'est en aucune façon limitée aux formes de réalisation décrites ci-dessus et que bien des modifications peuvent y être apportées sans sortir du cadre des revendications annexées.

## Revendications

1. Composition à base de chaux comprenant au moins un agent minéral comprenant au moins de la chaux éteinte en phase solide et au moins un polymère organique **caractérisé en ce que** ledit au moins un polymère organique est incorporé dans ladite phase solide de la chaux éteinte, et **en ce que** ladite composition à base de chaux est une composition solide.

2. Composition selon la revendication 1, dans laquelle ledit agent minéral comprend en outre de la chaux vive.

3. Composition selon la revendication 2, dans laquelle la chaux éteinte est présente en une quantité allant de 0,5 à 99,8 % en poids de préférence de 1 à 99 % en poids et de manière plus préférentielle de 10 à 70 % en poids par rapport au poids de la composition.

4. Composition selon l'une quelconque des revendications 1 à 3, dans laquelle ledit polymère organique est présent en une quantité allant de 0,2 à 10 % en poids, de préférence de 0,5 à 8 % en poids et de manière plus préférentielle de 1 à 6,5 % en poids par rapport au poids de la composition.

5. Composition selon l'une quelconque des revendications 2 à 4, dans laquelle ladite chaux vive est présente en une quantité allant de 0,1 % à 99,3 %, de préférence de 20 à 80 % en poids par rapport au poids de la composition.

6. Composition selon l'une quelconque des revendications précédentes dans laquelle ledit polymère organique est un polymère hydrophile de nature non ionique, anionique, cationique ou amphotère, linéaire, ramifié ou réticulé.

7. Composition selon la revendication 6, dans laquelle ledit polymère organique est choisi dans le groupe des polymères organiques et des copolymères organiques et comprend un ou plusieurs monomères choisis dans le groupe constitué des monomères anioniques possédant une fonction carboxylique ou sulfonique, en particulier de l'acide acrylique, de l'acide méthacrylique, de l'acide 2-acrylamido-2-méthylpropane sulfonique (ATBS), et leurs sels, des monomères non ioniques comme l'acrylamide, le méthacrylamide, la N-vinyl pyrolidone, le vinylacétate, l'alcool vinylique, les esters acrylate, l'alcool allylique, le N-vinyl acétamide et la N-vinyl formamide, des monomères cationiques comme l'acrylate de diméthyl aminométhyl (ADAME), le méthacrylate de diméthyl aminométhyl (MADAME) quaternités ou salifiés, le chlorure de diméthyldiallylammonium (DADMAC), le chlorure d'acrylamido propyltriméthyl ammonium (APTAC) et le chlorure de méthacrylamido propyltriméthyl ammonium (MAPTAC), éventuellement en association avec un ou plusieurs monomère(s) hydrophobe(s), de préférence choisis dans le groupe constitué des esters d'acide (méth)acrylique à chaine alkyle, arylalkyle et/ou éthoxylée, les dérivés de (méth)acrylamide à chaîne alkyle, arylalkyle ou dialkyle, les dérivés allyliques cationiques, les dérivés de (méth)acryloyle hydrophobes anioniques ou cationiques ou en association avec un ou plusieurs monomère(s) anionique(s) et/ou cationique(s) dérivé(s) de (méth)acrylamide portant une chaîne hydrophobe.

8. Composition selon l'une quelconque des revendications 1 à 6, dans laquelle ledit polymère est constitué d'une résine de type polyamine à base d'épichlorhydrine, de type dicyandiamide, de type mélamine formaldéhyde, de type polyalkylèneimine et analogue.

9. Composition selon l'une quelconque des revendications précédentes, dans laquelle ledit polymère organique est un floculant non ionique, anionique, cationique ou amphotère présentant un poids moléculaire moyen pondéral compris entre 5.10⁶ g/mol et 40.10⁶ g/mol

10. Composition selon l'une quelconque des revendications précédentes, dans laquelle ledit polymère organique est un coagulant, cationique ou amphotère, présentant un poids moléculaire moyen pondéral compris entre 20.000 et 5.10⁶ g/mol.

11. Composition selon la revendication 10, dans laquelle ledit coagulant cationique ou amphotère est à base de sels de diallyldialkylammonium.

12. Procédé de préparation d'une composition à base de chaux selon la revendication 1 comprenant une mise en présence d'un agent minéral et d'une solution, dispersion ou émulsion inverse, aqueuse comprenant au moins un polymère organique et de l'eau, **caractérisé en ce qu'**il comprend une mise en contact intime entre un agent minéral à base de chaux vive et ladite solution, dispersion ou émulsion inverse aqueuse, contenant au moins un polymère organique, de façon à obtenir une réaction exothermique d'extinction au moins partielle de la chaux vive par ladite eau ou partie de ladite eau contenant ledit polymère organique et à former une composition solide à base de chaux dans laquelle ledit au moins un polymère organique est incorporé dans une phase solide de chaux éteinte.

13. Procédé selon la revendication 12, comprenant en outre :
- une addition séparée de polymère organique, avant ou après ladite mise en présence d'un agent minéral à base de chaux vive et d'une solution, dispersion ou émulsion inverse aqueuse.

14. Procédé selon la revendication 12 ou la revendication 13, comprenant en outre une addition séparée d'eau, avant ou après ladite mise en présence d'un agent minéral à base de chaux vive et d'une solution, dispersion ou émulsion inverse aqueuse.

15. Utilisation de la composition suivant l'une quelconque des revendications 1 à 11, pour sa mise en oeuvre dans le traitement des eaux et boues, en particulier pour le conditionnement de boues avant déshydratation.

## Patentansprüche

1. Zusammensetzung auf Grundlage von Kalk, die mindestens eine mineralisches Substanz umfasst, die mindestens Löschkalk in Festphase und mindestens ein organisches Polymer umfasst, **dadurch gekennzeichnet, dass** das mindestens eine organische Polymer in der Festphase des Löschkalks eingeschlossen ist und dadurch, dass die Zusammensetzung auf Grundlage von Kalk eine feste Zusammensetzung ist.

2. Zusammensetzung nach Anspruch 1, wobei die mineralische Substanz ferner Branntkalk umfasst.

3. Zusammensetzung nach Anspruch 2, wobei der Löschkalk in einer Menge von 0,5 bis 99,8 Gew.% vorliegt, vorzugsweise von 1 bis 99 Gew.% und besonders bevorzugt von 10 bis 70 Gew.% bezogen auf das Gewicht der Zusammensetzung.

4. Zusammensetzung nach einem der Ansprüche 1 bis 3, wobei das organische Polymer in einer Menge von 0,2 bis 10 Gew.% vorliegt, vorzugsweise von 0,5 bis 8 Gew.% und besonders bevorzugt von 1 bis 6,5 Gew.% bezogen auf das Gewicht der Zusammensetzung.

5. Zusammensetzung nach einem der Ansprüche 2 bis 4, wobei der Branntkalk in einer Menge von 0,1 bis 99,3 Gew.% vorliegt, vorzugsweise von 20 bis 80 Gew.% bezogen auf das Gewicht der Zusammensetzung.

6. Zusammensetzung nach einem der vorherigen Ansprüche, wobei das organische Polymer ein hydrophiles Polymer nicht ionischer, anionischer, kationischer oder amphoterer Natur ist, linear, verzweigt oder vernetzt.

7. Zusammensetzung nach Anspruch 6, wobei das organische Polymer ausgewählt ist aus der Gruppe von organischen Polymeren und organischen Copolymeren und eines oder mehrere Monomere umfasst, die ausgewählt sind aus der Gruppe bestehend aus anionischen Monomeren die eine Carboxyl- oder Sulfonsäurefunktion besitzen, insbesondere Acrylsäure, Methacrylsäure, 2-Acrylamido-2-methylpropansulfonsäure (ATBS) und deren Salze, nicht ionische Monomere wie etwa Acrylamid, Methacrylamid, N-Vinylpyrrolidon, Vinylacetat, Vinylalkohol, Acrylatester, Allylalkohol, N-Vinylacetamid und N-Vinylformamid, kationische Monomere wie etwa Dimethylaminomethylacrylat (ADAME), Dimethylaminomethlymethacrylat (MADAME) quaternisiert oder versalzt, Dimethyldiallylammoniumchlorid (DADMAC), Acrylamidopropyltrimethylammoniumchlorid (APTAC), Methacrylamidopropyltrimethylammoniumchlorid (MAPTAC), gegebenenfalls im Verbund mit einem oder mehreren hydrophoben Monomeren, vorzugsweise ausgewählt aus der Gruppe bestehend aus (Meth)acrylsäureestern mit Alkyl-, Arylalkyl- und/oder ethoxylierter Kette, Derivaten von (Meth)acrylamid mit Alkyl-, Arylalkyl- oder Dialkylkette, kationischen Allylderivaten, hydrophoben anionischen oder kationischen (Meth)acryloylderivaten oder im Verbund mit einem oder mehreren anionischen und/oder kationischen Monomeren abgeleitet von (Meth)acrylamid, die eine hydrophobe Kette tragen.

8. Zusammensetzung nach einem der Ansprüche 1 bis 6, wobei das Polymer aus einem Harz vom Polyamintyp auf Grundlage von Epichlorhydrin besteht, vom Dicyandiamidtyp, vom Melaminformaldehydtyp, vom Polyalkylenimintyp und entsprechend.

9. Zusammensetzung nach einem der vorherigen Ansprüche, wobei das organische Polymer ein nicht ionisches, anionisches, kationisches oder amphoteres Flockungsmittel ist, das ein mittleres Molekulargewicht zwischen 5 10⁶ g/mol und 40 10⁶ g/mol aufweist.

10. Zusammensetzung nach einem der vorherigen Ansprüche, wobei das organische Polymer ein kationisches oder amphoteres Koagulans ist, das ein mittleres Molekulargewicht zwischen 20.000 und 5 10⁶ g/mol aufweist.

11. Zusammensetzung nach Anspruch 10, wobei das kationische oder amphotere Koagulans auf Grundlage von Diallyldialkylammoniumsalzen vorliegt.

12. Verfahren zur Herstellung einer Zusammensetzung auf Grundlage von Kalk nach Anspruch 1, welches das Zusammenbringen einer mineralischen Substanz und einer Lösung, Dispersion oder inversen wässrigen Emulsion umfasst, die mindestens ein organisches Polymer und Wasser umfasst, **dadurch gekennzeichnet, dass** es das enge in Kontakt bringen einer mineralischen Substanz auf Grundlage von Branntkalk und der Lösung, Dispersion oder inversen wässrigen Emulsion, die mindestens ein organisches Polymer enthält, derart umfasst, dass eine zumindest teilweise exotherme Extinktionsreaktion des Branntkalks mit dem Wasser oder Wasseranteil, der das organische Polymer enthält, erhalten wird und eine feste Zusammensetzung auf Grundlage von Kalk gebildet wird, wobei das mindestens eine organische Polymer in eine Festphase von Löschkalk eingeschlossen wird.

13. Verfahren nach Anspruch 12, das ferner Folgendes umfasst:
- eine getrennte Zugabe von organischem Polymer, vor oder nach dem Zusammenbringen einer mineralischen Substanz auf Grundlage von Branntkalk und einer Lösung, Dispersion oder inversen wässrigen Emulsion.

14. Verfahren nach Anspruch 12 oder Anspruch 13, das ferner eine getrennte Zugabe von Wasser umfasst, vor oder nach dem Zusammenbringen einer mineralischen Substanz auf Grundlage von Branntkalk und einer Lösung, Dispersion oder inversen wässrigen Emulsion.

15. Verwendung der Zusammensetzung nach einem der Ansprüche 1 bis 11 zum Einsatz bei der Behandlung von Wässern oder Schlämmen, insbesondere zur Schlammkonditionierung vor einer Dehydratisierung.

## Claims

1. A lime-based composition comprising at least one mineral agent comprising at least slaked lime in a solid phase and at least one organic polymer, **characterized in that** said at least one organic polymer is incorporated into said solid phase of the slaked lime, and **in that** said lime-based composition is a solid composition.

2. The composition according to claim 1, wherein said mineral agent further comprises quicklime.

3. The composition according to claim 2, wherein the slaked lime is present in an amount ranging from 0.5 to 99.8% by weight, preferably from 1 to 99% by weight and more preferentially from 10 to 70% by weight based on the weight of the composition.

4. The composition according to any of claims 1 to 3, wherein said organic polymer is present in an amount ranging from 0.2 to 10% by weight, preferably from 0.5 to 8% by weight and more preferentially from 1 to 6.5% by weight based on the weight of the composition.

5. The composition according to any of claims 2 to 4, wherein said slaked lime is present in an amount ranging from 0.1% to 99.3%, preferably from 20 to 80% by weight based on the weight of the composition.

6. The composition according to any of the preceding claims, wherein in said organic polymer is a hydrophilic, linear, branched or cross-linked polymer of non-ionic, anionic, cationic or amphoteric nature.

7. The composition according to claim 6, wherein said organic polymer is selected from the group of organic polymers and organic copolymers and comprises one or more monomers is selected from the group consisting of anionic monomers having a carboxylic or sulfonic function, in particular acrylic acid, methacrylic acid, 2-acrylamido-2-methylpropane-sulfonic acid (ATBS), and their salts, non-ionic monomers like acrylamide, methacrylamide, N-vinylpyrrolidone, vinyl acetate, vinyl alcohol, acrylate esters, allyl alcohol, N-vinylacetamide and N-vinylformamide, cationic monomers like dimethyl aminomethyl acrylate (ADAME), dimethyl aminomethyl methacrylate (MADAME), either quaternized or salified, dimethyldiallylammonium chloride (DADMAC), acrylamidopropyltrimethyl ammonium chloride (APTAC) and methacrylamidopropyltrimethyl ammonium chloride (MAPTAC), optionally in association with one or more hydrophobic monomers, preferably selected from the group consisting of (meth)acrylic acid esters with an alkyl, arylalkyl and/or ethoxylated chain, derivatives of (meth)acrylamide with an alkyl, arylalkyl or dialkyl chain, cationic allyl derivatives, anionic or cationic hydrophobic (meth)acryloyl derivatives or in association with one or more anionic and/or cationic monomers derived from (meth)acrylamide bearing a hydrophobic chain.

8. The composition according to any of claims 1 to 6, wherein said the polymer consists of a resin of the polyamine type based on epichlorhydrin, of the dicyandiamide type, of the melamine formaldehyde type, of the polyalkyleneimine type and the like.

9. The composition according to any of the preceding claims, wherein said organic polymer is a non-ionic, anionic, cationic or amphoteric flocculant having a weight average molecular weight comprised between 5.10⁶ g/mol and 40. 10⁶ g/mol.

10. The composition according to any of the preceding claims, wherein said organic polymer is a cationic or amphoteric coagulant having a weight average molecular weight comprised between 20,000 and 5.10⁶ g/mol.

11. The composition according to claim 10, wherein said cationic or amphoteric coagulant is based on diallydialkylammonium salts.

12. A method for preparing a lime-based composition according to claim 1, comprising putting into presence a mineral agent and an aqueous solution, dispersion or reverse emulsion comprising at least one organic polymer and water, **characterized in that** it comprises putting a mineral agent based on slaked lime into intimate contact with said aqueous solution, dispersion or reverse emulsion containing at least one organic polymer, so as to obtain an exothermic reaction of at least partial slaking of the quicklime by said water or portion of said water containing said organic polymer and to form a solid lime-based composition into which said at least one organic polymer is incorporated in a solid slaked lime phase.

13. The method according to claim 12, further comprising:
- a separate addition of organic polymer, before or after said putting into presence of a mineral agent based on quicklime and of an aqueous solution, dispersion or reverse emulsion.

14. The method according to claim 12 or claim 13, further comprising separate addition of water, before or after said putting into presence of a mineral agent based on quicklime and of an aqueous solution, dispersion or reverse emulsion.

15. The use of the composition according to any of claims 1 to 11, for its application in the treatment of waters and sludges, in particular for conditioning sludges before dehydration.
